(19)

Europäisches
Patentamt
European
Patent Office
Office européen
des brevets

(11)  **EP 4 407 395 A1**

(12)  **EUROPEAN PATENT APPLICATION**

(43) Date of publication:
**31.07.2024  Bulletin 2024/31**

(51) International Patent Classification (IPC):
***G05B 23/02*** *(2006.01)*

(21) Application number: **23153804.2**

(52) Cooperative Patent Classification (CPC):
**G05B 23/0283**

(22) Date of filing: **27.01.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventors:
• **KUK, Edyta
30-633 Kraków (PL)**

• **OTTEWILL, James
31-143 Kraków (PL)**
• **POLAND, Jan
5415 Nussbaumen (CH)**
• **YUAN, Kai
85591 Vaterstetten (DE)**

(74) Representative: **Vossius & Partner
Patentanwälte Rechtsanwälte mbB
Siebertstraße 3
81675 München (DE)**

(54)  **A POWER SYSTEM ASSET PROGNOSTIC HEALTH ANALYSIS**

(57)     The present disclosure relates to a method of performing a prognostic health analysis for an asset, in particular for determining a remaining useful life, RUL, of a power system asset or industrial asset, the method comprising: obtaining signals of at least one operational data; segmenting the signals of at least one operational data into a plurality of feature segments; determining a plurality of metric sets for each of the plurality of feature segments based on the signals of the at least one operational data in the respective plurality of feature segments, wherein each of the plurality of metric sets comprises at least one metric indicating a degree of correspondence between the signals of at least one operational data in the respective plurality of feature segments and a mathematical function; selecting the signals in at least one of the plurality of feature segments based on the plurality of metric sets; determining a prognostic asset health state based on the selected signals in at least one of the plurality of feature segments; and generating output based on the prognostic asset health state. The present disclosure also relates to a corresponding method of operating and/or maintaining an asset, a determining system operative to perform a prognostic health analysis for an asset and an industrial power system.

S101  Obtaining signals of at least one operational data

S102  Segmenting the signals of at least one operational data into a plurality of feature segments

S103  Determining a plurality of metric sets for each of the plurality of feature segments based on the signals of the at least one operational data in the respective plurality of feature segments

S104  Selecting the signals in at least one of the plurality of feature segments based on the plurality of metric sets

S105  Determining a prognostic asset health state based on the selected signals in at least one of the plurality of feature segments

S106  Generating output based on the prognostic asset health state

Fig. 1

EP 4 407 395 A1

**Description**

The present disclosure relates to a method, a determining system, and an industrial or a power system performing a prognostic health analysis.

In a power system, a physical device, also referred to as an asset, degrades over time. A degraded asset potentially causes a maloperation in the power system, thusly requires monitoring and performing a prognostic health analysis to plan for a repairment, a maintenance, or the like to improve the reliability of the power system. In particular, an estimation of a remaining useful life, RUL, may serve as an indicator for the health of an asset. Conventionally, the RUL is estimated from the monitored data by extracting, analyzing, and selecting features which are most indicative of, or have the greatest significance with respect to the RUL of the asset.re. Such estimation, however, becomes challenging when the asset operates in different operating modes. In such cases, the monitored data often show transitions, leading to discontinuities, skewing the significance of features, thereby leading to unreliable RUL estimations. For instance, a considered feature may show a high significance with respect to RUL estimation when assessed at a single operating modes, whereas the same considered feature may appear insignificant when assessed across a plurality of operating modes all together. This can lead to less significant features being used to estimate RUL, whilst more significant features are omitted. This in turn will result in less accurate and robust estimations of RUL and can limit the success of maintenance decision planning, failures and unnecessary maintenance actions.

Thus, there is a need to improve a method, a determining system, and an industrial or a power system performing a prognostic health analysis.

The present disclosure relates to a method of performing a prognostic health analysis for an asset, in particular for determining a remaining useful life, RUL, of a power system asset or industrial asset, the method comprising: obtaining signals of at least one operational data; segmenting the signals of at least one operational data into a plurality of feature segments; determining a plurality of metric sets for each of the plurality of feature segments based on the signals of the at least one operational data in the respective plurality of feature segments, wherein each of the plurality of metric sets comprises at least one metric indicating a degree of correspondence between the signals of at least one operational data in the respective plurality of feature segments and a mathematical function; selecting the signals in at least one of the plurality of feature segments based on the plurality of metric sets; determining a prognostic asset health state based on the selected signals in at least one of the plurality of feature segments; and generating output based on the prognostic asset health state.

In an embodiment, the method further comprises at least one of the following: planning maintenance based on the output; replacing at least one sensor, in particular a sensor identified to be critical for the health monitoring of the asset, for monitoring data based on the output; removing at least one sensor, for monitoring data, identified to be uninformative based on the output; sending the generated output to an end user via a graphical user interface; and optimizing a design of a monitoring system for the asset, in particular by retaining at least one sensor identified to be useful based on the output.

In an embodiment, the determining the prognostic asset health state comprises or is determining a RUL.

In an embodiment, the method further comprises: decomposing the signals of at least one operational data in the plurality of feature segments into at least a trend part and a residual part.

In an embodiment, the determining a plurality of metric sets for each of the plurality of feature segments is based on the trend part of the decomposed signals of at least one operational data in the plurality of feature segments.

In an embodiment, the method further comprises combining the plurality of metric sets into a single metric set indicating a degree of correspondence between the signals of at least one operational data in the plurality of feature segments and a mathematical function.

In an embodiment, the method further comprises normalizing the plurality of metric sets in magnitude and/or time.

In an embodiment, the method further comprises receiving sensor measurement data captured during operation of the asset; and updating the prognostic asset health state based on the received sensor measurement data.

In an embodiment, the asset is a power transformer, a distributed energy resource, DER, unit, or a power generator.

In an embodiment, each of the plurality of metric sets comprises at least one metric indicating a goodness of the signals of at least one operational data in the respective plurality of feature segments for determining a prognostic asset health state.

In an embodiment, selecting the signals in at least one of the plurality of feature segments is for determining a prognostic asset health state based on the plurality of metric sets.

In an embodiment, the method further comprises combining the plurality of metric sets into a single metric set indicating a goodness of the signals of at least one operational data in the plurality of feature segments for determining a prognostic asset health state.

The present disclosure also relates to a method of operating and/or maintaining an asset, in particular a power system asset or industrial asset, comprising: performing a prognostic asset health analysis for the asset using the method of any one of the preceding claims; and automatically performing at least one of the following: scheduling a down-time of the asset based on the determined prognostic asset health state; scheduling maintenance work based on the determined prognostic asset health state; scheduling replacement work based on the determined prognostic asset health state; changing maintenance intervals based on the determined prognostic asset health state.

The present disclosure further relates to a determining system operative to perform a prognostic health analysis for an asset, in particular for determining a remaining useful life, RUL, of a power system asset or industrial asset, the determining system comprising at least one integrated circuit operative to: obtain signals of at least one operational data; segment the signals of at least one operational data into a plurality of feature segments; determine a plurality of metric sets for each of the plurality of feature segments based on the signals of the at least one operational data in the respective plurality of feature segments, wherein each of the plurality of metric sets comprises at least one metric indicating a degree of correspondence between the signals of at least one operational data in the respective plurality of feature segments and a mathematical function; select the signals in at least one of the plurality of feature segments based on the plurality of metric sets; determine a prognostic asset health state based on the selected signals in at least one of the plurality of feature segments; and generate output based on the prognostic asset health state.

The present disclosure also relates to an industrial or power system, comprising: an asset and the aforementioned determining system to perform a prognostic asset health analysis for the asset, optionally wherein the determining system is a decentralized controller of the industrial or power system for controlling the asset.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

## Description of the Drawings

Fig. 1 illustrates a flow chart of the method according to an embodiment of the present disclosure.

Fig. 2 illustrates an exemplary monitored data according to an embodiment of the present disclosure.

Fig. 3 illustrates a flow chart of the method according to an embodiment of the present disclosure.

Fig. 4 illustrates a flow chart of the method according to an embodiment of the present disclosure.

Fig. 5 illustrates a flow chart of the method according to an embodiment of the present disclosure.

Fig. 6 a) illustrates an exemplary data with various signal patterns. Fig. 6 b) illustrates an exemplary data of Fig. 6 a) combined with artefacts to mimic the monitored data of an industrial or power system under various operating conditions. Fig. 6 c) illustrates the data of

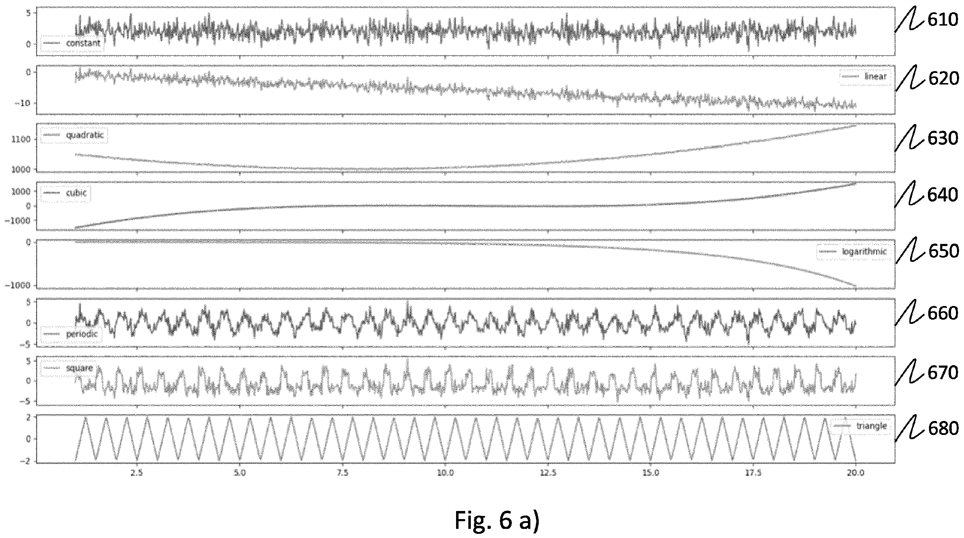

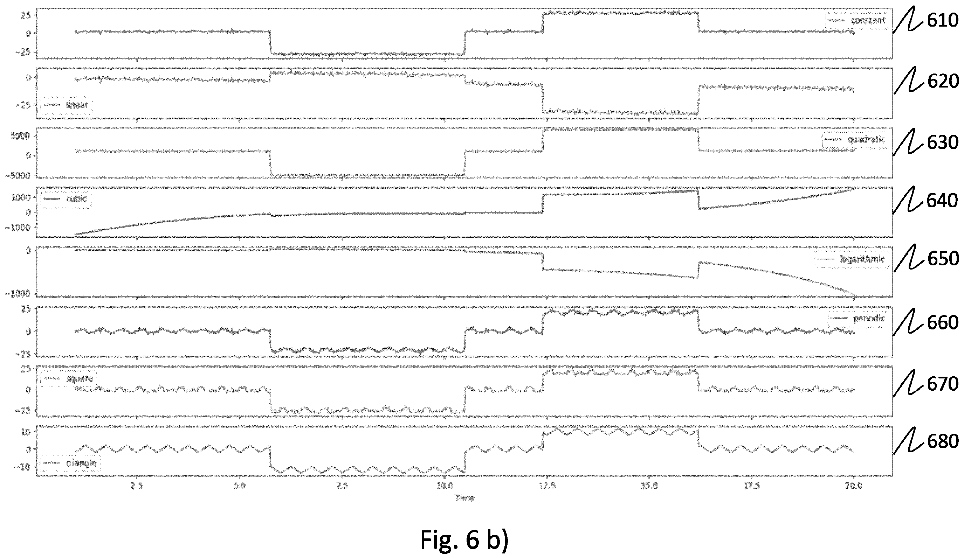

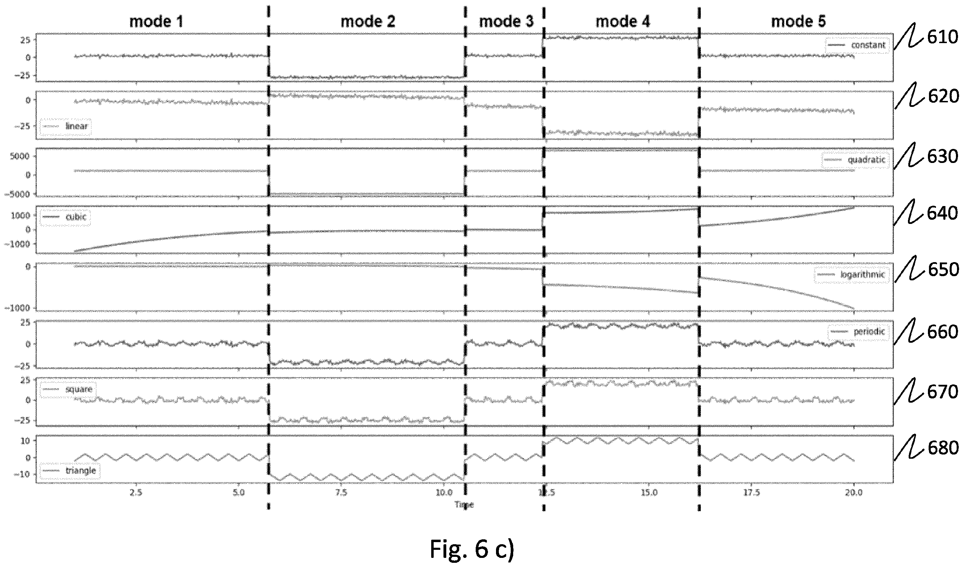

Fig. 6 b) with various feature segments that are segmented according to an embodiment of the present disclosure.

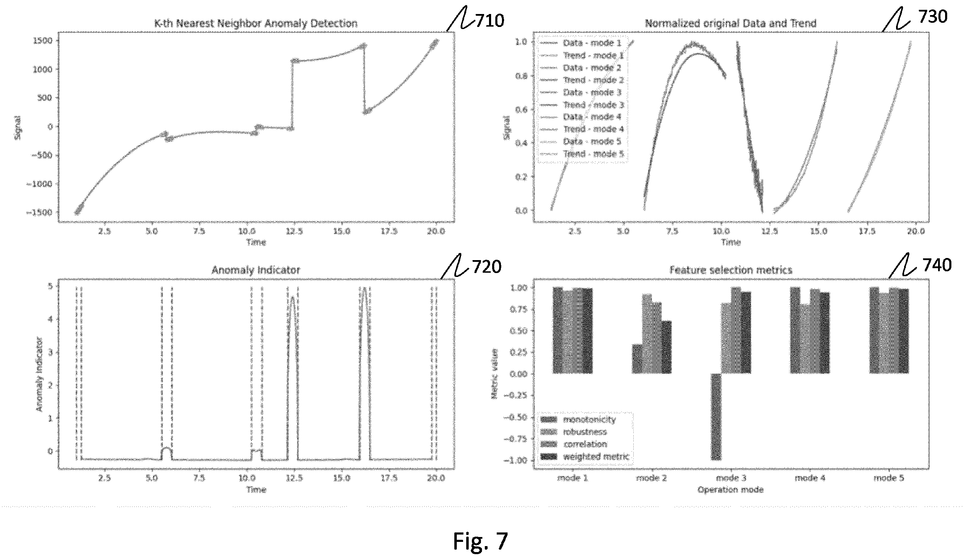

Fig. 7 illustrates outputs of various stages of the method according to an embodiment of the present disclosure.

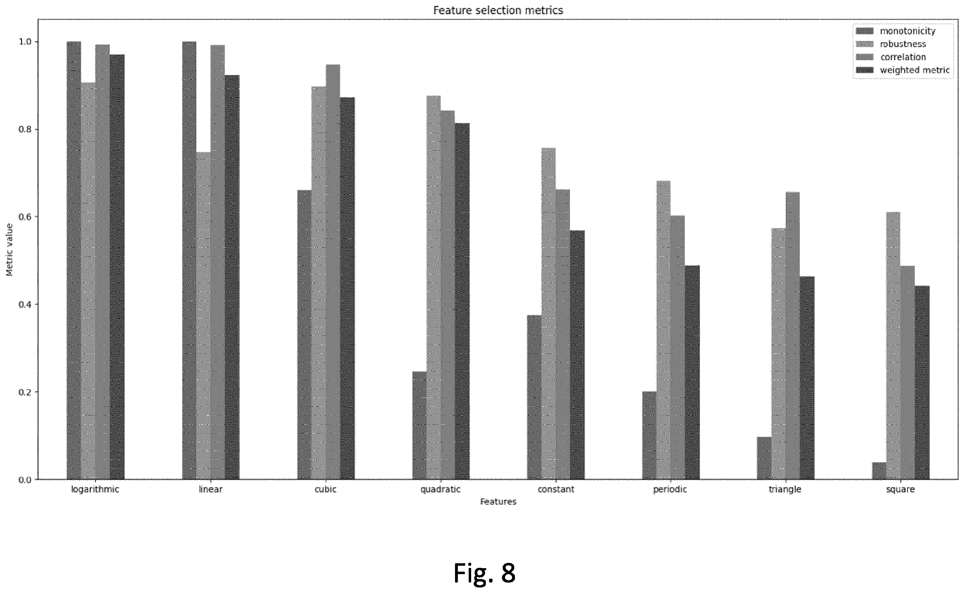

Fig. 8 illustrates an output of a stage of the method according to an embodiment of the present disclosure.

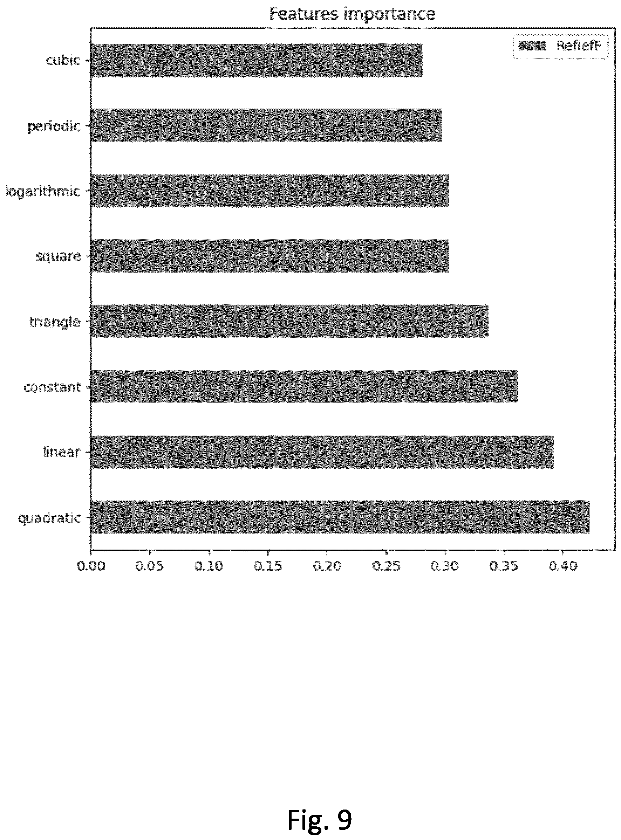

Fig. 9 illustrates an output of a stage of the method according to an embodiment of the present disclosure.

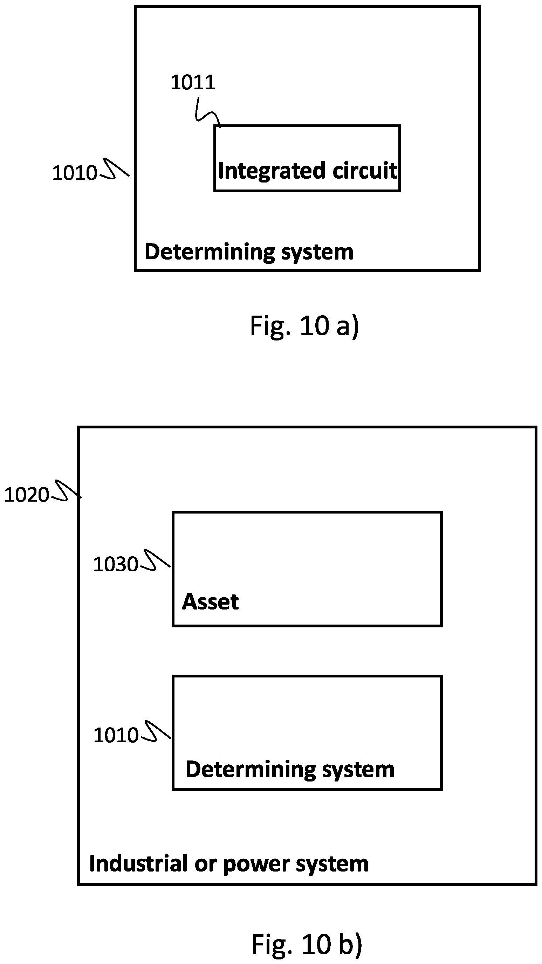

FIG. 10 a) illustrates a determining system according to an embodiment of the present disclosure. FIG. 10 b) illustrates an industrial or power system according to an embodiment of the present disclosure.

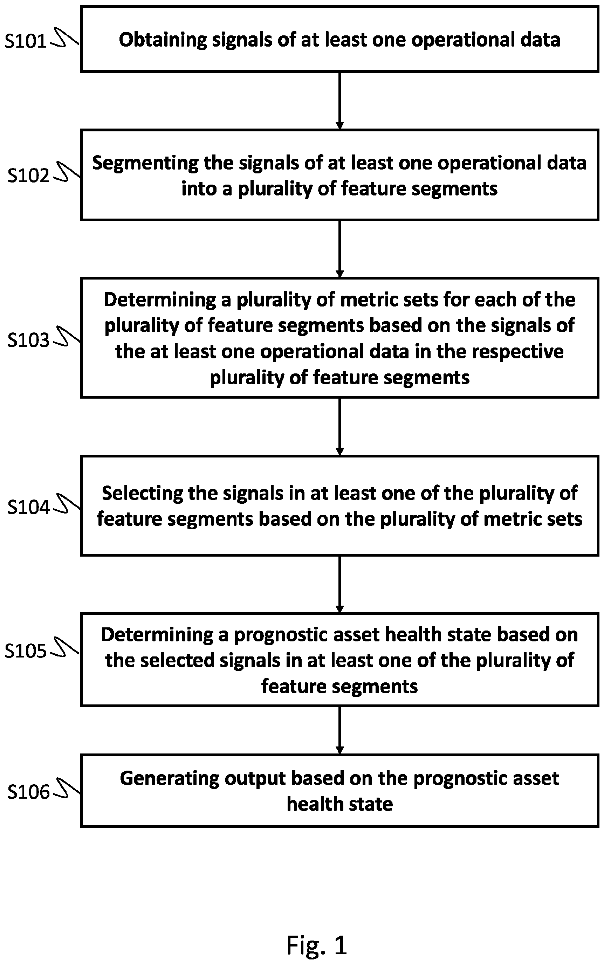

Fig. 1 illustrates a flow chart of the method according to an embodiment of the present disclosure. At S101, signals of at least one operational data are obtained. At S102, the signals of at least one operational data are segmented into a plurality of feature segments. At S103, a plurality of metric sets for each of the plurality of feature segments are determined based on the signals of the at least one operational data in the respective plurality of feature segments. In an embodiment, each of the plurality of metric sets comprises at least one metric indicating a degree of correspondence between the signals of at least one operational data in the respective plurality of feature segments and a mathematical function. At S104, the signals in at least one of the plurality of feature segments, in particular for determining a prognostic asset health state, are selected based on the plurality of metric sets. At S105, a prognostic asset health state is determined based on the selected signals in at least one of the plurality of feature segments. At S106, output is generated based on the prognostic asset health state.

In an embodiment, the method further comprises at least one of the following: planning maintenance based on the output; replacing at least one sensor, in particular a sensor identified to be critical for the health monitoring of the asset, for monitoring data based on the output; removing at least one sensor, for monitoring data, identified to be uninformative based on the output; sending the generated output to an end user via a graphical user interface; and optimizing a design of a monitoring system for the asset, in particular by retaining at least one sensor identified to be useful based on the output. In an embodiment, the determining the prognostic asset health state comprises or is determining a RUL. In an embodiment, the method further comprises receiving sensor measurement data captured during operation of the asset; and updating the prognostic asset health state based on the received sensor measurement data. In an embodiment, the asset is a power transformer, a distributed energy resource, DER, unit, or a power generator.

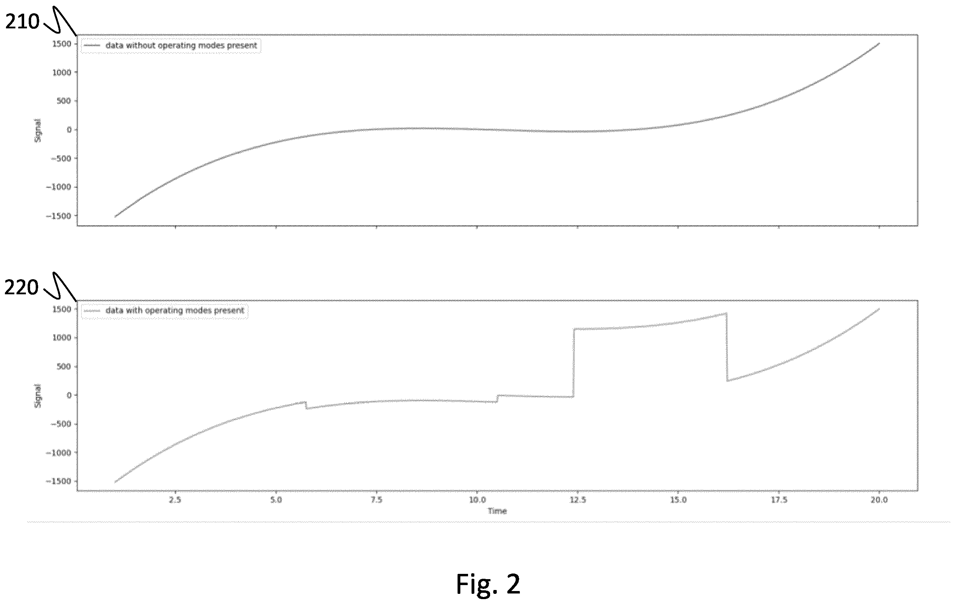

Fig. 2 illustrates an exemplary monitored data according to an embodiment of the present disclosure. In particular, a first subplot 210 is a graph of monitored data characterized by the continuity of the data curve therein without any transition or jump in data values. In contrast, the data curve illustrated in a second subplot 220 comprises a plurality of transitions (i.e., step changes), leading to a discontinuity in the data curve. Such discontinuity may be caused by, among others, various operating modes during which the monitored data are generated. For instance, during a time window $1 \leq t < 6$ in arbitrary unit, an asset operates in a first operating mode, during a time window $6 \leq t < 11$ in arbitrary unit, the asset operates in a second operating mode, and so on. It is understood by the skilled person that the first operation may be apart from the second operation in time, but the data monitored during the first and the second operations may be concatenated, for example to form a stream of data, for data processing purposes. An asset may operate in an operating mode based on an operating condition which may be dependent on an external factor, e.g., load and/or input, or an internal factor, e.g., maintenance status of the asset. That is, for instance, an asset may operate in a different operating mode when there is a change in load, input, and/or maintenance status of the asset. According to an embodiment, the monitored data is of an asset, in particular a power system asset or industrial asset, and/or associated with the health of the asset.

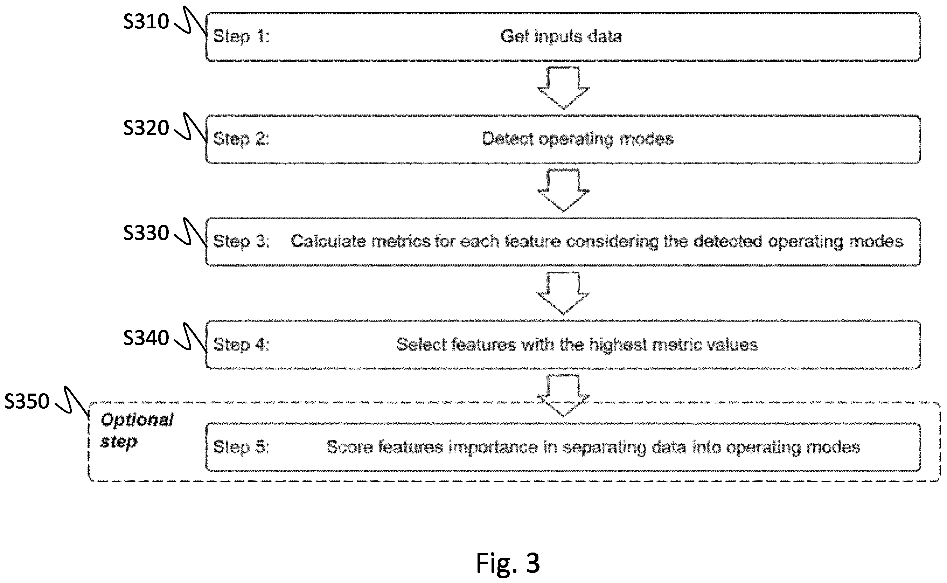

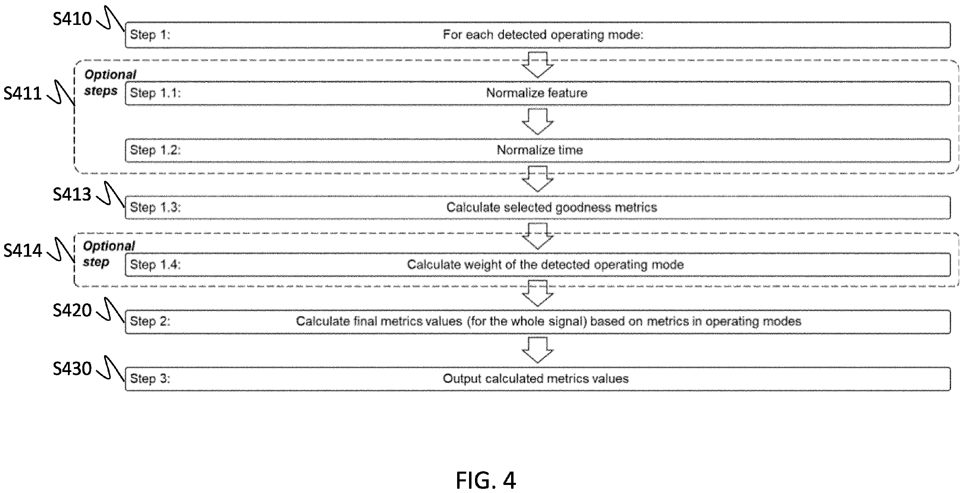

Fig. 3 illustrates a flow chart of the method according to an embodiment of the present disclosure. In particular, a high-level view of the method according to an embodiment of the present disclosure is illustrated. Obtained input data (S310) is processed to determine operating modes (S320) and segment the obtained input data into a plurality of segments. In an embodiment, a plurality of features is extracted from the obtained input data, wherein a feature is a set of values, in particular a set with a smaller dimension and/or size, describing another set of data, in particular a set of data with a comparatively a larger dimension and/or size, i.e., the obtained input data or a segment thereof. Accordingly, in an embodiment, a plurality of features is processed to determine the operating modes and/or is segmented into a plurality of segments. Then, at least one metric for each of a plurality of features is calculated based on the detected operating modes (S330) and accordingly, a feature among the plurality of features is selected based on the metrics of the said plurality of features, in particular a feature with the highest metric values is selected (S340). In other words, feature selection is a process of selecting the features which are most informative for a particular task. The feature selection may also support the selection of an optimum sensing configuration for an asset, such that only the sensors providing valuable data for a given task may be retained based thereon. It is understood by the skilled person that the feature selection methods are not limited to the methods described herein but can also be any other methods. In an embodiment, the features which are most able to distinguish the different operating modes are identified (S350). Fig. 4 further illustrates an embodiment of the metrics calculation performed at S330 in detail.

In reference to Fig. 4, for each data set obtained during the respective detected operating mode, i.e., the data sets within the feature segments and/or of the features extracted therefrom, the following methods are performed: optionally, each data set obtained during the respective detected operating mode is normalized in the data values (y-axis) and in time (x-axis) (S411); goodness metrics are calculated (S413) for each detected operating mode; optionally, weightings for each of the detected operating mode are calculated (S414); final metrics values for each feature over a plurality of feature segments is calculated (S420); and the goodness metrics and/or final metrics values are outputted (S430).

It is noted that a metric comprised in a metric set may also be referred to as a goodness metric. Accordingly, determining a metric may be equivalent to determining goodness metric, such that the block S413 corresponds to the following feature: determining a plurality of metric sets for each of the plurality of feature segments based on the signals of the at least one operational data in the respective plurality of feature segments, wherein each of the plurality of metric sets comprises at least one metric indicating a degree of correspondence between the signals of at least one operational data in the respective plurality of feature segments and a mathematical function.

In an embodiment, determining a metric is or comprises: obtaining an output of a mathematical function by applying an input data to the mathematical function, wherein the output is indicative of the goodness of the input data for determining the prognostic asset health state. The term 'goodness' may bear the same meaning, thus may be interchangeably used with, the wordings such as suitability, usefulness, applicability, significance, or the like. The input data may be an operational data orfeatures extracted therefrom. The mathematical function may define at least one a characteristic and/or relationship, such that output thereof indicates the presence or a degree of presence (or equivalently, prominence) of the defined at least one characteristic and/or relationship existing or underlying in the input data fed to the mathematical function. Accordingly, in an embodiment, the goodness metrics are outputs of a mathematical function obtained by processing the input that is fed to the mathematical function, wherein the goodness metrics indicate the presence or a degree of presence (or prominence) of the defined at least one characteristic and/or relationship existing or underlying in the input data fed to the metric, wherein the at least one characteristic and/or relationship is defined by the mathematical function. The goodness metrics may be indicative of the goodness of the input data for determining the prognostic asset health state. A non-exhaustive list of mathematical functions includes correlation, monotonicity, and robustness, as described below.

In an embodiment, each of the plurality of metric sets comprises at least one metric indicating a goodness of the signals of at least one operational data in the respective plurality of feature segments for determining a prognostic asset health state. In an embodiment, selecting the signals in at least one of the plurality of feature segments is for determining a prognostic asset health state based on the plurality of metric sets. In an embodiment, the method further comprises combining the plurality of metric sets into a single metric set indicating a goodness of the signals of at least one operational data in the plurality of feature segments for determining a prognostic asset health state.

In an embodiment, the obtained input data and/or the features extracted therefrom is decomposed into a trend and a residual part as follows:

$$X(t_k) = X_T(t_k) + X_R(t_k) \qquad (1)$$

wherein $X(t_k)$, $X_T(t_k)$, and $X_R(t_k)$ denote the value of the analyzed input data/feature at time $t_k$, the trend of the input/feature at time $t_k$, and the residual part of the input data/feature at time $t_k$, respectively. According to an embodiment, the input data/feature decomposition comprises smoothing the signal/feature, e.g., by means of linear locally weighted regression, moving average, or the like. In an embodiment, the goodness metrics are calculated based on the decomposed data. For instance, the goodness metrics may include a correlation as follows:

$$Corr(X,T) = \frac{|K \sum_k X_T(t_k)t_k - \sum_k X_T(t_k) \sum_k t_k|}{\sqrt{[K \sum_k X_T(t_k)^2 - (\sum_k X_T(t_k))^2][K \sum_k t_k^2 - (\sum_k t_k)^2]}} \qquad (2)$$

The goodness metrics are the computed correlation values, i.e., the left-hand side of eq. (2), which are the outputs obtained by applying an input data to a mathematical function described on the right-hand side of eq. (2), which defines a linear characteristic or relationship between time instances and the values at the said time instance in the input data. An input data with a highly linear relationship between the time instances and the values at the said time instances would thusly yield a high correlation. That is, a goodness metrics score is obtained for such input data. Similarly, the goodness metrics may further include a monotonicity as follows:

$$Mon(X) = \frac{1}{K-1} \left| \sum_k \delta\big(X_T(t_{k+1}) - X_T(t_k)\big) - \sum_k \delta\big(X_T(t_k) - X_T(t_{k+1})\big) \right| \qquad (3)$$

The right-hand side of eq. (3) evaluates a consistency in increase or decrease of the input data, i.e., a degree of maintenance of a derivative sign of the input data, and outputs the goodness metrics, i.e., the left-hand side of eq. (3). A highly monotonic input data, i.e., a data set with the values predominantly increasing or decreasing with a time progression, would score highly. So, the resulting goodness metrics would be high which indicates that the input data corresponds greatly with the monotonic function in eq. (3). The input data may be said to possess a high degree of monotonicity according to an embodiment. Similarly, the goodness metrics may further include a robustness as follows:

$$Rob(X) = \frac{1}{K} \sum_k \exp\left(-\left[\frac{X_R(t_k)}{X(t_k)}\right]\right) \qquad (4)$$

which evaluates a tolerance of the input data to outliers. In eq. (2) through eq. (4), $K$ denotes the total number of observations, and $\delta(\cdot)$ denotes the simple unit step function. The weighted metric of the goodness metrics may be determined for each operating mode as follows:

$$weightedMetric(X, T) = \omega_1 Corr(X, T) + \omega_2 Mon(X) + \omega_3 Rob(X) + \cdots + \omega_N Metric_N \quad (5)$$

wherein $\omega_i$ is an $i^{th}$ weighting coefficient scaling individual goodness metrics, and $N$ denotes the number of the considered goodness metrics. Accordingly, a final metric value may be determined as follows:

$$FinalMetric(X) = \theta_1 Metric_{mode_1}(X) + \theta_2 Metric_{mode_2}(X) + \cdots + \theta_M Metric_{mode_M}(X) \quad (6)$$

wherein $\theta_i$ denotes a weight for scaling the weighted metric of an $i^{th}$ operating mode. It is understood by the skilled person that the computation of the weighted metric and the final metric are not limited to the linear combination described herein, but can be performed using other methods.

In an embodiment, a plurality of features is extracted from the data within each of the feature segments. In an embodiment, a feature may be a logarithmic feature, linear feature, cubic feature, quadratic feature, constant feature, periodic feature, triangle feature, square feature, or the like. In an embodiment, the goodness metrics are calculated for each of the plurality of features from the data within each of the plurality of feature segments. Accordingly, the goodness metrics of a feature may be combined over a plurality of operating modes. For instance, an input data with two segments and each segment having a first feature and a second feature may be used for computing correlation and monotonicity according to eq. (2) and eq. (3), respectively. The correlation of the first feature of a first segment may be combined with the correlation of the first feature of a second segment, and similarly the monotonicity of the first feature of the first segment may be combined with the monotonicity of the first feature of the second segment. The same operation can be performed for the goodness metrics of the second feature. As a result, the goodness metrics for each feature over a plurality of operating modes can be compared. Accordingly, a feature or a subset of features can be selected based on the goodness metrics for each feature over a plurality of operating modes. An embodiment illustrating the combined goodness metrics values with respect to the features is disclosed in Fig. 8.

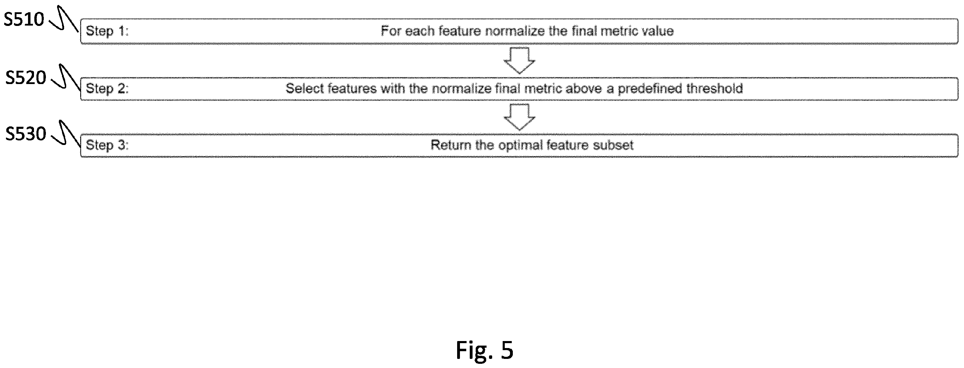

Fig. 5 illustrates a flow chart of the method according to an embodiment of the present disclosure. In particular, an embodiment of the features selected at S340 is illustrated by means of a flow chart. The final metrics values of features, e.g., computed according to eq. (6), are normalized at S510. According to an embodiment, the features may be sorted based on the normalized final metrics. The features with the corresponding normalized final metrics exceeding a threshold may be selected at S520 and be classified into an optimal feature subset.

According to an embodiment, a feature or a subset of features may be selected based on a threshold without the normalization. The optimal feature subset is returned at S530.

Fig. 6 a) illustrates an exemplary data with various signal patterns. Fig. 6 b) illustrates an exemplary data of Fig. 6 a) combined with artefacts to mimic the monitored data of an industrial or power system under various operating conditions. Fig. 6 c) illustrates the data of Fig. 6 b) with various feature segments that are segmented according to an embodiment of the present disclosure. In particular, subplots 610 to 680 in Fig. 6 a) through 6 c) illustrate the features: constant, linear, quadratic, cubic, logarithmic, periodic, square, and triangle, respectively. The subplots of Fig. 6 a) illustrate the original feature data, and the subplots of Fig. 6 b) illustrate the modified feature data, wherein 5 operating modes are added to the original feature data of subplots of Fig. 6 a), i.e., 5 transitions in data have been added to each feature data of subplots 610 to 680. Fig. 6 c) illustrates the detected 5 different operating modes from the subplots 610 to 680 of Fig. 6 b) based on the above-described embodiment of the present disclosure, e.g., operating modes detection at S320.

Fig. 7 illustrates outputs of various stages of the method according to an embodiment of the present disclosure. A first subplot 710 illustrates the cubic feature of Fig. 6 b) and the transition points (marked with dots on the data curve) based on the operating modes detection according to an embodiment of the present disclosure. Operating modes may be detected based on the anomaly indicator computed by the multivariate transient detection algorithm, as illustrated in a second subplot 720. The cubic features of the first subplot 710 is segmented into 5 different operating modes based on the anomaly indicators of the second subplot 720. Each of the segmented operating modes is normalized and smoothened to be decomposed into the trend and the residual part. A third subplot 730 illustrates the normalized original data of the 5 segments and the respective trends. A linear locally weighted regression was applied in this example for data smoothing. A fourth subplot 740 illustrates the calculated goodness metrics of eq. (2) through eq. (4) computed for the individual operating modes. The monotonicity metric has a positive value when the feature is increasing and a negative value when the feature is decreasing in order to indicate the direction of the trend of the feature. The fourth subplot 740 also illustrates the weighted metrics of the individual operating modes computed on the basis of the goodness metrics of the respective individual operating modes. The weighted metrics of the individual operating modes may be combined to yield the final metric of the considering feature, e.g., according to eq. (6). The above-described feature assessments are repeated for each of the feature.

Fig. 8 illustrates an output of a stage of the method according to an embodiment of the present disclosure. In particular, Fig. 8 illustrates the combined goodness metrics and the weighted metrics for each of the feature. The final weighted metrics values of features show that the optimal feature is the logarithmic feature followed by the linear, the cubic, and the quadratic. The final weighted metrics values may be sorted and selected, for instance by comparing to a threshold value, to form an optimal subset of features.

Fig. 9 illustrates an output of a stage of the method according to an embodiment of the present disclosure. In particular, Fig. 9 illustrates the features importance scores for the features presented in Fig. 6. The features importance scores may be the outputs of the block S350 and indicate the feature performances (or equivalently, suitability, usefulness, applicability, significance, or the like) in distinguishing different operating modes. In an embodiment, the features importance scores are used for a feature selection, e.g., in classification. Accordingly, feature selection algorithms for classification problems may also be applied here, e.g. ReliefF algorithm. In an embodiment, the features importance scores may be used to identify features indicative of the time of the maintenance. For instance, an operational data obtained before a maintenance of a device or a system may differ largely from those obtained after the maintenance, i.e., there exists a transition in the values of the operational data. In such case, the maintenance time may be identified based on the features importance scores or the features selected based thereon. Accordingly, the data may be separated into the data before and after maintenance based on the features importance scores or the features selected based thereon. In an embodiment, the features importance scores or the features selected based thereon may be used for determining a prognostic asset health state.

FIG. 10 a) and 10 b) illustrate a determining system and an industrial or power system according to embodiments of the present disclosure. In particular, FIG. 10 a) illustrates a determining system according to an embodiment of the present disclosure. The determining system 1010 comprises at least one integrated circuit 1011 operative to perform any one of the above-described embodiments. FIG. 10 b) illustrates an industrial or power system according to an embodiment of the present disclosure. The industrial or power system 1020 comprises an asset 1030 and the determining system 1010.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method of performing a prognostic health analysis for an asset, in particular for determining a remaining useful life, RUL, of a power system asset or industrial asset, the method comprising:

obtaining signals of at least one operational data;
segmenting the signals of at least one operational data into a plurality of feature segments;
determining a plurality of metric sets for each of the plurality of feature segments based on the signals of the at least one operational data in the respective plurality of feature segments,
wherein each of the plurality of metric sets comprises at least one metric indicating a degree of correspondence between the signals of at least one operational data in the respective plurality of feature segments and a mathematical function;
selecting the signals in at least one of the plurality of feature segments based on the plurality of metric sets;
determining a prognostic asset health state based on the selected signals in at least one of the plurality of feature segments; and
generating output based on the prognostic asset health state.

2. The method of claim 1, further comprising at least one of the following:

planning maintenance based on the output;
replacing at least one sensor, in particular a sensor identified to be critical for the health monitoring of the asset, for monitoring data based on the output;
removing at least one sensor, for monitoring data, identified to be uninformative based on the output;
sending the generated output to an end user via a graphical user interface;
and
optimizing a design of a monitoring system for the asset, in particular by retaining at least one sensor identified to be useful based on the output.

3. The method of claim 1 or 2, wherein the determining the prognostic asset health state comprises or is determining a RUL.

4. The method of any one of the preceding claims, further comprising:
decomposing the signals of at least one operational data in the plurality of feature segments into at least a trend part and a residual part; and
wherein determining a plurality of metric sets for each of the plurality of feature segments is based on the trend part of the decomposed signals of at least one operational data in the plurality of feature segments.

5. The method of any one of the preceding claims, further comprising combining the plurality of metric sets into a single metric set indicating a degree of correspondence between the signals of at least one operational data in the plurality of feature segments and a mathematical function.

6. The method of claim 5, further comprising normalizing the plurality of metric sets in magnitude and/or time.

7. The method of any one of the preceding claims, further comprising:

receiving sensor measurement data captured during operation of the asset; and
updating the prognostic asset health state based on the received sensor measurement data.

8. The method of any one of the preceding claims, wherein the asset is a power transformer, a distributed energy resource, DER, unit, or a power generator;

9. A method of operating and/or maintaining an asset, in particular a power system asset or industrial asset, comprising:

performing a prognostic asset health analysis for the asset using the method of any one of the preceding claims; and
automatically performing at least one of the following: scheduling a down-time of the asset based on the determined prognostic asset health state; scheduling maintenance work based on the determined prognostic asset health state; scheduling replacement work based on the determined prognostic asset health state; changing maintenance intervals based on the determined prognostic asset health state.

10. A determining system operative to perform a prognostic health analysis for an asset, in particular for determining a remaining useful life, RUL, of a power system asset or industrial asset, the determining system comprising at least one integrated circuit operative to:

obtain signals of at least one operational data;
segment the signals of at least one operational data into a plurality of feature segments;
determine a plurality of metric sets for each of the plurality of feature segments based on the signals of the at least one operational data in the respective plurality of feature segments,
wherein each of the plurality of metric sets comprises at least one metric indicating a degree of correspondence between the signals of at least one operational data in the respective plurality of feature segments and a mathematical function;
select the signals in at least one of the plurality of feature segments based on the plurality of metric sets;
determine a prognostic asset health state based on the selected signals in at least one of the plurality of feature segments; and
generate output based on the prognostic asset health state.

11. An industrial or power system, comprising:

an asset and
the determining system of claim 10 to perform a prognostic asset health analysis for the asset, optionally wherein the determining system is a decentralized controller of the industrial or power system for controlling the asset.

S101 — **Obtaining signals of at least one operational data**

S102 — **Segmenting the signals of at least one operational data into a plurality of feature segments**

S103 — **Determining a plurality of metric sets for each of the plurality of feature segments based on the signals of the at least one operational data in the respective plurality of feature segments**

S104 — **Selecting the signals in at least one of the plurality of feature segments based on the plurality of metric sets**

S105 — **Determining a prognostic asset health state based on the selected signals in at least one of the plurality of feature segments**

S106 — **Generating output based on the prognostic asset health state**

Fig. 1

Fig. 2

S310 — Step 1: Get inputs data

S320 — Step 2: Detect operating modes

S330 — Step 3: Calculate metrics for each feature considering the detected operating modes

S340 — Step 4: Select features with the highest metric values

S350 — Step 5: Score features importance in separating data into operating modes

*Optional step*

Fig. 3

S410 — Step 1:            For each detected operating mode:

S411 — **Optional steps**

Step 1.1:            Normalize feature

Step 1.2:            Normalize time

S413 — Step 1.3:            Calculate selected goodness metrics

S414 — **Optional step**

Step 1.4:            Calculate weight of the detected operating mode

S420 — Step 2:            Calculate final metrics values (for the whole signal) based on metrics in operating modes

S430 — Step 3:            Output calculated metrics values

FIG. 4

S510 — | Step 1: | For each feature normalize the final metric value |

S520 — | Step 2: | Select features with the normalize final metric above a predefined threshold |

S530 — | Step 3: | Return the optimal feature subset |

Fig. 5

Fig. 6 a)

EP 4 407 395 A1

Fig. 6 b)

EP 4 407 395 A1

Fig. 6 c)

Fig. 7

Fig. 8

Fig. 9

1011

1010

Integrated circuit

Determining system

Fig. 10 a)

1020

1030

Asset

1010

Determining system

Industrial or power system

Fig. 10 b)

Europäisches
Patentamt

European
Patent Office

Office européen
des brevets

## EUROPEAN SEARCH REPORT

Application Number

EP 23 15 3804

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ATAMURADOV VEPA ET AL: "Railway Point Machine Prognostics Based on Feature Fusion and Health State Assessment", IEEE TRANSACTIONS ON INSTRUMENTATION AND MEASUREMENT, IEEE, USA, vol. 68, no. 8, 1 August 2019 (2019-08-01), pages 2691-2704, XP011734504, ISSN: 0018-9456, DOI: 10.1109/TIM.2018.2869193 [retrieved on 2019-07-11] * the whole document * | 1-11 | INV. G05B23/02 |
| X | FAN HAIDONG ET AL: "Collaborative Analysis of Multiple Fault Characteristics Based Fault Prognostic Analytics for Large-scale Generate Unit", 2019 CHINESE AUTOMATION CONGRESS (CAC), IEEE, 22 November 2019 (2019-11-22), pages 4803-4808, XP033711574, DOI: 10.1109/CAC48633.2019.8996263 [retrieved on 2020-02-12] * Section II. * | 1-11 | |
| X | CN 112 304 615 A (XIAN YINGTEMAISI INFORMATION TECH CO LTD) 2 February 2021 (2021-02-02) * the whole document * | 1-11 | TECHNICAL FIELDS SEARCHED (IPC)<br><br>G05B |

The present search report has been drawn up for all claims

| Place of search | Date of completion of the search | Examiner |
|---|---|---|
| Munich | 6 July 2023 | Marrone, Fabrizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 15 3804

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2023

| Patent document cited in search report | Publication date | Patent family member(s) | Publication date |
|---|---|---|---|
| CN 112304615 A | 02-02-2021 | NONE | |

For more details about this annex : see Official Journal of the European Patent Office, No. 12/82